# EUROPEAN PATENT APPLICATION

(11) **EP 3 646 696 A1**
(43) Date of publication of application: **06.05.2020**
(21) Application number: 19201288.8
(22) Date of filing: 03.10.2019
(51) Int. Cl.: A01D 34/64, A01D 43/063

(54) **LAWNMOWER**

(30) Priority: 05.11.2018 IT 201800010035
(71) Applicant: Officine Bieffebi S.p.A., 46023 Gonzaga (Mantova) (IT)
(72) Inventor: FERRARI, Alessio, 46023 GONZAGA (MN) (IT)
(74) Representative: Corradini, Corrado

(57) **Abstract**

A lawnmower (10) that comprises:
a support frame (20);
a device (40) for cutting grass;
a collecting container (50) connected to the cutting device (40) by means of a conveying conduit (45) connected to an inlet (52) of the collecting container and provided with an outlet opening (53) for unloading the grass from the collecting container (50);
a cover (60) movably connected to the collecting container (50) selectively between an open position and a closed position of the outlet opening (53); and
a bulkhead (54) delimiting an edge (531) of the outlet opening (53) and movable, when the cover (60) opens the outlet opening, between a first position in which the outlet opening (53) has a minimum size, and a second position in which the outlet opening (53) has a larger size than the minimum size.

## Description

### TECHNICAL FIELD

The present invention relates to the field of agricultural machines, and in particular machines for cutting grass. The present invention was developed in particular with regards to a lawnmower, and even more specifically, with regards to a cutting device for a lawnmower.

### EXISTING ART

Self-moving lawnmowers driven by a user seated on board are known in the field of agricultural machines for cutting grass.

The lawnmowers of this type comprise a support frame provided with a plurality of wheels for standing on the ground, of which at least one pair of wheels is driven, so as to provide the machine with the necessary traction.

The support frame of the lawnmower is also connected to a grass cutting device (generally placed in front of the seat of the user), which is connected by means of a convenient conveying conduit to a grass collecting container also supported by the support frame and generally placed behind the seat of the user.

The cutting device may itself be such as to push the cut grass towards the collecting container due to the force of the rotation of the cutting tool, and such a push allows the cut grass to be compacted inside the collecting container and therefore to effectively fill the same.

A need of these types of lawnmowers is the one of allowing and optimizing the compacting, and therefore the efficient filling, of the collecting container and simultaneously of allowing and facilitating the emptying of the collecting container once filled.

It has indeed been encountered that against an efficient filling and compacting of the cut grass in the collecting container, there is a difficulty in unloading the cut (and compacted) grass from the collecting container once it is full, and vice versa in the case of poor filling and compacting of the collecting container, the user is forced to perform an increased number of unloading operations of the cut grass from the collecting container, with subsequent increases in dead times.

An object of the present invention is to overcome, meet the above-mentioned needs of the known art, within the context of a simple and rational solution and at a contained cost.

In particular, it is an object of the present invention to optimize and/or maximize the loading capacity of the collecting container and simultaneously improve the unloading ease of the cut grass from the same, also when the cut grass is particularly compacted and pressed in the collecting container.

Such purposes are accomplished by the characteristics of the invention given in the independent claims. The dependent claims outline preferred and/or particularly advantageous aspects of the invention.

### DESCRIPTION OF THE INVENTION

Particularly, the invention makes available a lawnmower that comprises:
a support frame;
a device for cutting grass; and
a cut grass collecting device comprising:
   a collecting container connected to the cutting device by means of a conveying conduit connected to an inlet of the collecting container and provided with an outlet opening for unloading the grass from the collecting container;
   a cover connected to the collecting container for selectively moving the outlet opening between an open position and a closed position; and
   a bulkhead delimiting an edge of the outlet opening and movable, when the cover opens the outlet opening, between a first position in which the outlet opening has a minimum size, and a second position in which the outlet opening has a larger size than the minimum size.

Thanks to such solution, it is possible to improve the compacting efficiency of the cut grass and therefore, to increase the loading and filling capacity of the collecting container, simultaneously allowing to improve the unloading capacity and efficiency of the cut grass from the collecting container - that is without compromising the easy unloading thereof - with a simple and affordable solution.

According to one aspect of the invention, the cover may be hinged to the collecting container with the possibility of oscillating about a hinging axis.

According to a further aspect, the bulkhead may be hinged to the collecting container with the possibility of oscillating about an oscillation axis.

Thanks to such solution, the opening and closing, and also the widening or decreasing of the outlet opening, may be performed in a simple and effective manner.

Advantageously, the hinging axis and the oscillation axis are parallel to and separate from each other.

According to a further aspect of the invention, there may be defined, between the cover and the collecting container, a first mouth for evacuating air intercepted by a first grass retaining grid fastened to the collecting container, the bulkhead being hinged to the first retaining grid with the possibility of oscillating about an oscillation axis.

Thanks to such solution, the bulkhead may be made without structural modifications to the cover or other parts (made of plastic) of the collecting container.

According to an advantageous aspect of the invention, the collecting container may comprise at least a second mouth for evacuating air intercepted by a second retaining grid.

Thanks to such solution, the evacuation of air is optimized and furthermore, the compacting of the cut grass inside the collecting container is optimized and facilitated.

Advantageously, the collecting container may be articulated to the support frame by means of an articulated arrangement configured to tilt the collecting container alternatively between a first operating position in which the cover is in the closed position of the outlet opening due to the weight force acting thereon and the bulkhead is in the first position thereof, and a second operating position in which the cover is in the open position of the outlet opening due to the effect of the weight force acting thereon and the bulkhead is in the second position thereof due to the weight force acting thereon.

Thanks to such solution, the opening and closing of the outlet mouth may be automated without the use of further dedicated actuator means.

According to a preferred embodiment, the articulated arrangement may be configured to raise the collecting container in the passage from the first operating position to the second operating position.

Thanks to such solution, it is possible to unload the cut grass from the collecting container directly into containers or bins that are open at the top.

For the same purposes disclosed above, a further aspect of the invention makes available a device for collecting cut grass for lawnmowers that comprises:
a collecting container provided with an inlet for the grass cut by the lawnmower and an outlet opening for unloading the grass from the collecting container;
a cover movably connected to the collecting container to selectively open and close the outlet opening; and
a bulkhead delimiting an edge of the outlet opening and movable, when the cover opens the outlet opening, between a first position in which the outlet opening has a minimum size, and an open position in which the outlet opening has a larger size than the minimum size.

### BRIEF DESCRIPTION OF THE DRAWINGS

Further features and advantages of the invention will be more apparent after reading the following description provided by way of a non-limiting example, with the aid of the accompanying drawings.
Figure 1 is a longitudinal sectional view of a lawnmower according to the invention.

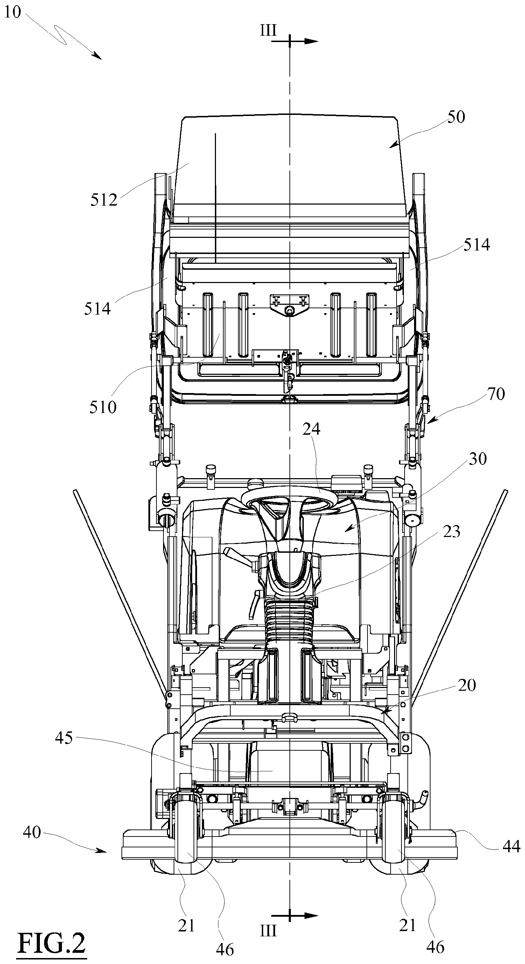

Figure 2 is a front view of the lawnmower of figure 1, with the collecting container in the second operating position thereof.
Figure 3 is a cross-sectioned view of the lawnmower according to line III-III of figure 2.
Figure 4 is an enlarged detail of figure 3 concerning the collecting container.
Figure 5 is a perspective rear view of the collecting container according to the invention, without the cover.

### IMPROVED METHOD FOR IMPLEMENTING THE INVENTION

With particular reference to such drawings, a lawnmower is indicated as a whole with 10, preferably a self-moving lawnmower of the so-called man on board type, that is adapted to be driven by a user arranged, preferably seated, on board.

The lawnmower 10 comprises a support frame 20, which is generally formed by conveniently bent tubes that are welded and/or bolted to one another, on which there is installed a plurality of wheels standing on the ground, of which a pair of front wheels 21 arranged coaxial on a front axle, and a pair of rear wheels 22 arranged coaxial on a rear axle.

It is immediately worth noting that front axle and rear axle generically mean the rotation axles about which the front wheels 21 and the rear wheels 22 are respectively adapted to rotate when the lawnmower 10 moves by straight motion.

The front axle and the rear axle are parallel to each other and both are orthogonal to a longitudinal axis of the lawnmower 10 that passes through the midpoint between the front wheels 21 and through the midpoint between the rear wheels 22.

A motor 30 is installed on the support frame 20, for example an internal combustion motor, the centre of which preferably is comprised in plane between the front axle and the rear axle and substantially is placed in the centre of the travelled way of the lawnmower 10, i.e. along the aforesaid longitudinal axis.

The motor 30 is connected to a fuel tank, as known to a person skilled in the art, it also supported by the support frame 20.

The motor 30 in the example is adapted to place the front wheels 21 into rotation by means of a usual transmission system so as to provide the lawnmower 10 with the traction required for the movements on the ground, while the rear wheels 22 are steered so as to provide the lawnmower 10 with the required directivity.

In particular, the rear wheels 22 are connected - by means of a common mechanical transmission system (not illustrated) - to a steering column 23 that carries a steering wheel 24 fitted on the free end thereof.

The steering column 23 is installed in the front part of the support frame 20, in front of a driving station that comprises a seat 25 fastened on a platform of the support frame 20, for example in front of the motor 30.

The driving station also comprises a forward/reverse pedal and in general all the commands required for driving the lawnmower 10, which are not herein illustrated in detail because they are common.

Both the steering column 23 and the seat 25 are also positioned substantially in the centre of the travelled way of the lawnmower 10.

Alternatively to the steering column 23 and to the steering wheel 24, it is possible to use different steering systems, such as for example steering handlebars or the like.

A grass cutting device 40 is connected to the support frame 20, which device commonly is called a cutting deck.

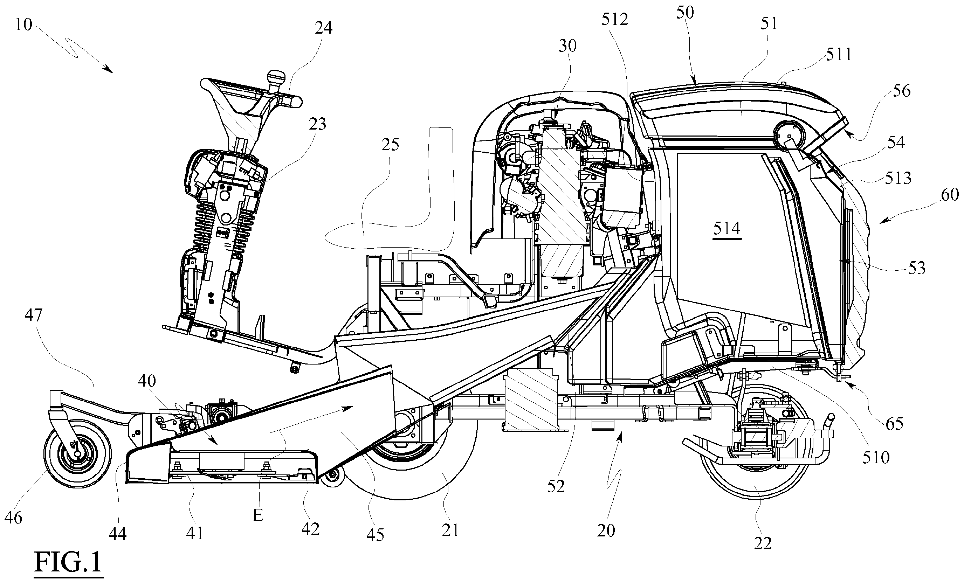

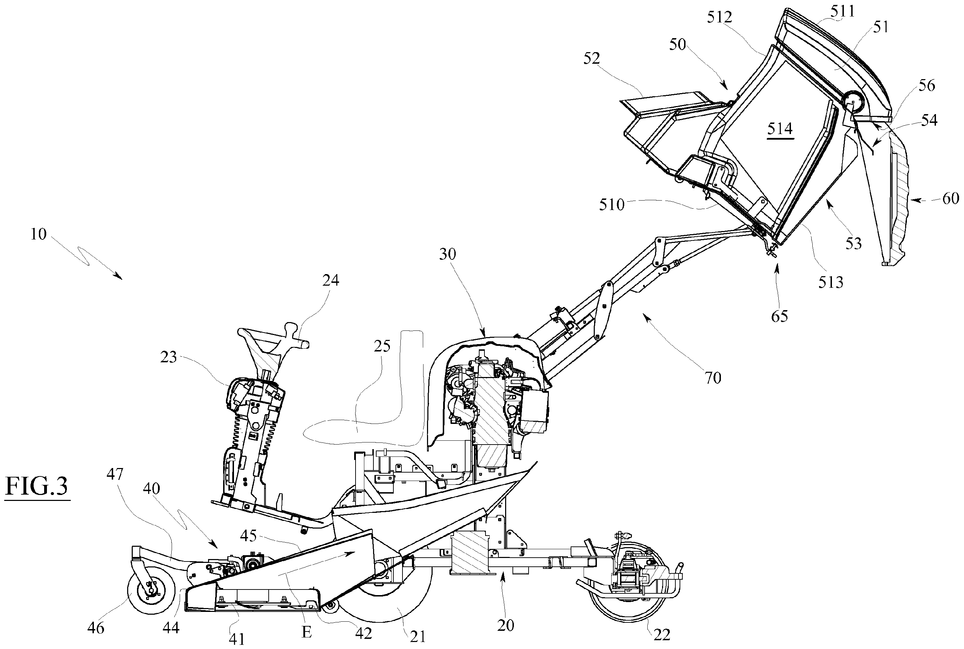

As shown in the drawings, the cutting device 40 is provided with a rotating blade 41 or a pair of rotating blades 41 (see figure 1 and figure 3), each of which comprises a support disc and two identical cutters that protrude from diametrically opposite sides of the support disc.

The rotating blades 41 lie coplanar on a horizontal plane placed a short distance from the ground and are adapted to rotate about a respective vertical rotation axis passing through the centre of the support disc.

More specifically, the rotating blades 41 are activated to rotate by a motor - in the case in hand by the same motor 30 that also activates the front wheels 21 of the lawnmower 10 - by means of a common motion transmission system (not illustrated) that engages them to rotate always at the same speed but in opposite directions.

Thereby, each rotating blade 41 is adapted to describe a circumference, the maximum diameter of which is equal to the distance between the ends of the cutters and that, in combination with the advancement of the lawnmower 10, is capable of cutting a grass strip having width equal to said maximum diameter.

A vertically developing blade 42 protrudes from the upper side of each cutter, the function of the blade being the one of pushing and projecting the cut grass in direction tangent to the rotary movement of the relative rotating blade 41.

Since the rotating blades 41 rotate in opposite directions, the pushing effects of the respective cutters are summed at the midpoint between the rotation axes, where both are adapted to project the cut grass into a same pushing direction indicated with E in figure 1.

To take advantage of this kinetic energy in order to collect the cut grass, the rotating blades 41 are covered and surrounded by a protecting guard 44 having substantially the shape of a thin casing open on the bottom, from which a (central) conveying conduit 45 branches off, which substantially is aligned with the aforesaid pushing direction E.

Thereby, the cut grass is accelerated by the rotating blades 41 and projected outside the protecting guard 44 only through the conveying conduit 45.

As illustrated in the drawings, the cutting device 40 is connected to the support frame 20 in front position, that is at the front with respect to the front axle.

The cutting device 40 is also positioned in the centre of the travelled way of the lawnmower 10 so that the pushing direction E of the cut grass substantially coincides with the longitudinal axis of the support frame 20 and is directed towards the rear part of the lawnmower 10.

In the example illustrated, the cutting deck 40 comprises two caster stand wheels 46 located in front of the protecting guard 44 and is connected to the support frame 20 by means of one or more connecting arms 47.

These connecting arms 47 are articulated to the support frame 20 to allow the cutting device 40 to be tilted and adapted to the slopes of the ground.

As illustrated in the drawings, the conveying conduit 45 extends in plane with straight path along the longitudinal axis of the support frame 20.

More specifically, the conveying conduit 45 passes below the driving station, that is below the seat 25, and below the back motor 30 up to leading, with an open outlet mouth thereof, to a rear area of the lawnmower 10, for example placed at the bottom of the rear end of the motor 30.

The conveying conduit 45 is tilted from the bottom upwards from the cutting device 40 towards the back of the lawnmower 10.

The conveying conduit 45 in turn leads to the inside of a collecting container 50 in which the cut grass accumulates for example, by direct loading, i.e. without the aid of any additional loading device, rather by the push exerted on the cut grass by the rotating blades 41 (that is by the blades 42 thereof).

In essence, the conveying conduit 45 connects the cutting device 40 with the collecting container 50 by transferring the grass cut by the rotating blades 41 into the collecting container 50 itself.

The collecting container 50 has a width substantially equal to the width of the lawnmower 10 and is installed in central position in the rear part of the support frame 20, for example substantially above the rear axle.

The collecting container 50 comprises a substantially prismatic box-like body 51 delimited by a bottom wall 510, an opposed top wall 511 and a lateral casing consisting of a front wall 512, that is facing towards the front (that is, towards the front axle), an opposed rear wall 513 (that is, facing towards the rear) and two lateral sides 514.

The collecting container 50 preferably comprises an inlet 52 defined by an inlet opening made in one of the walls that defines the lateral casing, preferably in the front wall 512, for example close to the bottom wall 510.

The inlet 52 in fact is adapted to communicate with the outlet mouth of the conveying conduit 45 to put the conveying conduit 45 into communication with the inner volume of the collecting container 50.

In essence, the perimeter edge of the inlet 52 is shaped in such a manner as to substantially correspond in measure to the edge of the outlet mouth of the conveying conduit 45 to substantially sealingly adhere thereto.

Moreover, the collecting container 50 comprises an outlet opening 53 for unloading the grass from the collecting container 50, which preferably is also made in one of the walls that define the lateral casing, preferably in the rear wall 513, for example close to the bottom wall 510.

The size of the outlet opening 53 is greater than the size of the inlet 52 and for example, develops in width substantially for the whole width of the rear wall 513, and in height for more than half the height of the rear wall 513.

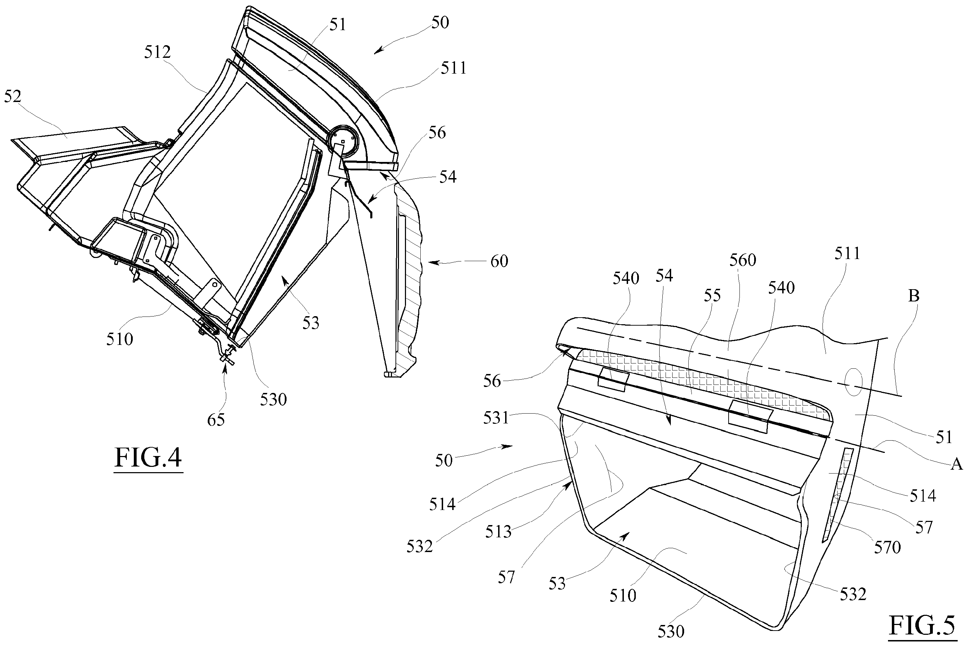

The outlet opening 53 (see in particular figure 5) is peripherally contoured by a perimeter edge, which consists of a lower edge 530 that is defined by the edge between the bottom wall 510 and the rear wall 513 - for example substantially level with the bottom wall 510 -, an opposed upper edge 531 and two side edges 532 that substantially are symmetrical with respect to a vertical median plane of the collecting container 50.

The collecting container 50, in particular the rear wall 513 thereof, comprises a bulkhead 54 that is connected to the collecting container 50 in a movable manner.

The bulkhead 54 is defined by a plate-like body, for example substantially rectangular, that delimits and defines the upper edge 531 of the outlet opening 53.

The bulkhead 54 for example, has a length equal to the width of the collecting receptacle 50, that is of the rear wall 513, so as to join to the two side edges 532, that is to the lateral sides 514, at the longitudinal ends thereof.

In essence, the bulkhead 54 is a portion of the rear wall 513 that is movable with respect to the box-like body 51, as will be described better below.

The bulkhead 54 preferably is rotatably coupled to the collecting container 50, that is to the box-like body 51 that defines it, with the possibility of oscillating about an oscillation axis A (see figure 5) that is substantially horizontal (or in any case parallel to the rotation axis of the front wheels 21 and/or the rear wheels 22).

The oscillation axis A is placed at the top with respect to the bulkhead 54, for example it substantially coincides with an upper longitudinal edge thereof.

In essence, the lower longitudinal edge of the bulkhead 54 defines the upper (movable) edge 531 of the outlet opening 53 that delimits the same at the top, and is placed (parallel) at a distance from the lower edge 530.

The bulkhead 54 is configured to (freely) oscillate alternatively between a first position in which the outlet opening 53 has a minimum size, and a second position in which the outlet opening 53 has a larger size than the minimum size.

In other words, when the bulkhead 54 is in the first position, the lower longitudinal edge of the bulkhead 54 that defines the upper edge 531 of the outlet opening 53 is at a minimum distance **d1** from the lower edge 530 of the outlet opening 53 itself; when the bulkhead 54 is in the second position, the lower longitudinal edge of the bulkhead 54 that defines the upper edge 531 of the outlet opening 53 is at a (variable) distance **d2** from the lower edge 530 of the outlet opening 53 itself which is greater than the aforesaid minimum distance **d1**, thus spreading or enlarging the opening 53.

In the example illustrated, when the bulkhead 54 is in the first position thereof, it rests on and is in contact, with its longitudinal ends (that is, the end portions of the inner face thereof), with an upper portion of the two side edges 532, that is of the lateral sides 514.

A damper body is interposed between the bulkhead 54 and the upper portion of the two side edges 532, that is the lateral sides 514, the damper body for example, defined by resilient block, for example made of rubber, fastened to each of the end portions of the inner face of the bulkhead 54.

When the bulkhead 54 is in the second position thereof, it is rotated about the oscillation axis A so that the lower longitudinal edge of the bulkhead 54 that defines the upper edge 531 of the outlet opening 53 (as well as the longitudinal ends thereof) is detached and moves away from the upper portion of the two side edges 532, that is of the lateral sides 514, and therefore from the lower edge 530.

For example, in the second position thereof, the bulkhead 54 oscillates at the back of the collecting container 50, that is it oscillates (or opens) towards the outside thereof.

The bulkhead 54 is for example, hinged by means of convenient hinges 540 (see figure 5), to an upper longitudinal cross member 55 that is rigidly (and integrally) fastened to the opposite ends of the lateral sides 514 of the collecting container 50, the hinging axis of which hinges coinciding with the oscillation axis A.

The longitudinal cross member 55 (see figure 5) delimits the outlet opening 53 at the top when the bulkhead 54 is in the second position thereof and therefore, it is at a (constant) distance **d3** from the lower edge 530 of the outlet opening 53 which is greater than the aforesaid minimum distance **d1** (and the distance **d2**).

The collecting container 50 comprises at least one mouth for evacuating air, for example intercepted by a respective cut grass retaining grid which is configured to evacuate the air pushed by the cutting device 40, that is by the rotation of the blades 42 of the rotating blades 41, from the collecting container 50 (and at the same time allow the effective compacting of the cut grass inside the collecting container 50).

For example, the collecting container 50 comprises a first mouth 56 intercepted by a first grass retaining grid 560 (see figure 5) fastened to the collecting container 50 so as to involve the whole free surface of the first mouth 56.

The first (main) mouth 56 is made at one of the walls that define the lateral casing, preferably in the rear wall 513, for example close to the top wall 511.

The first mouth 56 is defined at the top of the outlet opening 53 and is separated therefrom by the cross member 55 (and by the bulkhead 54, when it is in the first position thereof).

The first mouth 56 for example develops, in width, substantially for the whole width of the rear wall 513 and in height, for a lower height with respect to the height of the outlet opening 53.

The first mouth 56 is peripherally contoured by a perimeter edge, which consists of an upper edge that is defined by the edge between the top wall 511 and the rear wall 513, an opposed lower edge that is defined by the upper longitudinal edge of the cross member 55 (and/or of the bulkhead 54) and two side edges (for example, rounded) that substantially are symmetrical with respect to a vertical median plane of the collecting container 50.

The first retaining grid 560 is fastened (for example welded) to the cross member 55 and to perimeter supporting uprights that are fastened inside the collecting container, for example to the top wall 511 thereof.

For example, the collecting container 50 (also) comprises a second mouth 57 (see figure 5) intercepted by a second grass retaining grid 570 fastened to the collecting container 50 so as to involve the whole free surface of the second mouth 57.

The second (secondary) mouth (57) is made at one of the walls that defines the lateral casing, preferably in each of the lateral sides 514.

Each second mouth 57 is delimited by a thin gap made in a rear face of an (aerodynamic) branch protruding outwards from the respective lateral side 514.

The lawnmower 10 then comprises a cover 60 which is movably connected to the collecting container 50 selectively between an open position in which it opens the outlet opening 53, and a closed position in which it (completely) closes the outlet opening 53.

The cover 60 is defined by a plate-like body, for example substantially quadrangular, or in any case shaped to occlude the outlet opening 53 when the bulkhead 54 is in the first position thereof.

In essence, the cover 60 comprises an inner face shaped so as to rest on (and be in contact with) the perimeter edge of the outlet opening 53 (that is, the lower edge 530, the upper edge 531 (defined by the lower longitudinal edge of the bulkhead 54) and the two side edges 532 so as to close (and seal) the same substantially to measure).

The cover 60 preferably is rotatably coupled to the collecting container 50, that is to the box-like body 51 that defines it.

In particular, the cover 60 is hinged to the collecting container 50 with the possibility of oscillating about a hinging axis B (see figure 5) which substantially is horizontal (or in any case parallel to the rotation axis of the front wheels 21 and/or of the rear wheels 22), preferably parallel to and separate from (not coinciding with) the oscillation axis A of the bulkhead 54.

The hinging axis B is placed at the top with respect to the cover 60 and for example, also at the top of the oscillation axis A.

The cover 60 is placed at the rear of the bulkhead 54, that is the bulkhead 54 is adapted to be at least partially interposed (and clamped) between the rear wall 513 of the collecting container 50 and the cover 60 (in contact with the inner face of the latter).

The cover 60 comprises for example, an upper fork at the free ends of which there are defined the hinging pins or seats that restrain the cover 60 to the collecting container 50 (that is, to the lateral sides 514 thereof, preferably outside thereof), with the possibility of oscillating about the hinging axis B.

A (free) passage gap that is intended to overlap (along the longitudinal axis of the support frame 20) the first mouth 56 (thus contributing to defining the same, that is leaving the first mouth itself open) is defined between the upper fork and the horizontal upper edge of the cover 60.

The cover 60 is configured to (freely) oscillate about the hinging axis B alternatively between a first closed position in which the outlet opening 53 is (completely) occluded, and an open position in which the outlet opening 53 is at least partially open (that is, the inner volume of the collecting container 50 is in communication with the outside through the same).

In other words, when the cover 60 is in the open position thereof, the bulkhead 54 is forcedly brought into the first position thereof and the perimeter edge of the outlet opening 53 (at least partially defined by the bulkhead 54 itself) is forcedly in contact with the inner face of the cover 60.

When the cover 60 is in the open position thereof, it is rotated about the hinging axis B so that the lower longitudinal edge thereof detaches and moves away from the lower edge 530, thus opening the outlet opening 53 at the bottom.

For example, in the open position thereof, the cover 60 oscillates at the back of the collecting container 50, that is it oscillates (or opens) towards the outside thereof (by an angle greater than or equal to the opening angle of the bulkhead 54 in the second position thereof).

When the cover 60 is brought into the free open position thereof, the bulkhead 54 is then free to oscillate about the oscillation axis A thereof towards the second position thereof.

A level sensor configured to sense a predetermined maximum filling level of grass of the collecting container 50 may be contained inside the collecting container 50.

The level sensor (not illustrated) is operatively connected to an electronic control unit and to a visual and/or audible warning device placed for example, at the steering column 23 in which the electronic control unit is configured to activate the warning device when the level sensor detects a level of cut grass equal to or greater than the aforesaid maximum level.

Thereby, the user may be warned when there is a need or it is advisable to empty the collecting container 50.

The lawnmower 10 is provided with an articulated arrangement 70 configured to at least partially overturn the collecting container 50 at the back so as to turn the outlet opening 53 downwards to empty the collecting container 50.

In essence, the articulated arrangement 70 articulates the collecting container 50 to the support frame 20 so as to tilt the collecting container 50 alternatively between a first operating position in which the bottom wall 510 of the collecting container 50 is arranged substantially horizontal, and a second operating position in which the bottom wall 510 of the collecting container 50 is arranged substantially tilted with respect to a horizontal plane with the lower edge 530 of the through opening 530 placed lower with respect to the bottom wall 510 itself.

In the first operating position, the inlet 52 of the collecting container 50 matches and communicates with the outlet mouth of the conveying conduit 45.

Instead in the second operating position, the inlet 52 of the collecting container 50 is spaced away from the outlet mouth of the conveying conduit 45.

The articulated arrangement 70 comprises an articulated arm provided with convenient linear actuators adapted to activate the articulated arm between the two aforesaid operating positions.

In the example illustrated, the articulated arrangement 70 is also configured to raise the collecting container 50 in the passage from the first operating position to the second operating position.

The cover 60 is configured so that when the collecting container 50 is in the first operating position thereof, the weight force acting on the cover itself is such as to push it and bring it into the closed position of the outlet opening 53.

In particular, the centre of the cover 60 is aligned in plane with the hinging axis B of the cover itself and is placed below it.

In such configuration, any oscillation of the bulkhead 54 about its oscillation axis A preferably is prevented.

Moreover, the cover 60 is configured so that when the collecting container 50 is in the second operating position thereof, the weight force acting on the cover itself is such as to push it and bring it into the open position of the outlet opening 53.

In particular, when the collecting container 50 is tilted/overturned into the second operating position thereof, the cover 60 remains in its stable balance position in which the centre of the cover 60 is aligned in plane with the hinging axis B of the cover itself and is placed below it (thus detaching from the perimeter edge of the outlet opening 53).

In such configuration, any oscillation of the bulkhead 54 about its oscillation axis A preferably is made possible.

In particular, the bulkhead 54 is configured so that when the collecting container 50 is in the second operating position thereof and the cover 60 is brought into the open position thereof, the weight force acting on the bulkhead 54 itself is such as to push it and bring it into the second position thereof in which it enlarges the outlet opening 53.

In other words, the centre of the bulkhead 54 is aligned in plane with the oscillation axis A of the bulkhead itself and is placed below it.

In particular, when the collecting container 50 is tilted/overturned into the second operating position thereof, the bulkhead 54 remains in its stable balance position in which the centre of the bulkhead 54 is aligned in plane with the oscillation axis A and is placed below it.

The (independent) oscillation of the cover 60 and the bulkhead 54 is therefore a natural oscillation that is not actuated or controlled by external actuation members.

Joining members 65 which are adapted to (snappingly) retain the cover 60 in the closed position thereof when the collecting container 50 is in the aforesaid first operating position thereof, are defined between the cover 60, that is the lower longitudinal edge thereof, and the collecting container 50.

Such joining members 65 are configured so as to exert a force of adhesion on the cover 60 that is smaller than the weight force acting on the cover itself that induces the passage from the closed position to the open position of the cover 60 with respect to the collecting container 50.

The joining members 65 are also configured to exert a force of adhesion on the cover 60 that is greater than the pushing force of the air pushed by the blades 42 of the cutting blades 41 acting on the cover 60 so as to prevent an accidental opening of the cover 60 when the collecting container is in the first operating position thereof.

The inclination of the collecting container 50 between the first operating position and the second operating position is activated by a button or lever or other control member (not illustrated because common), the operation of which is controlled by the user at the driving station.

The collecting container 50, the cover 60 and the bulkhead 54 are part of a cut grass collecting device, wherein the grass cut by the cutting device 40 of the lawnmower 10 is (temporarily) collected.

In light of the above, the operation of the lawnmower 10 is as follows.

During the operation of the lawnmower 10, it advances along a cutting path and the grass cut by the cutting device 40 is conveyed through the conveying conduit 45 into the collecting container 50, which is kept in the first operating position thereof.

When the collecting container 50 is to be emptied, or requires emptying, of the cut grass, it is sufficient to position the lawnmower 10 in the specific unloading area and to activate the articulated arrangement 70 so that it brings the collecting container 50 into the second unloading position.

Indeed, as soon as the collecting container 50 is brought into the second unloading position thereof, the cover 60 is automatically brought into the open position thereof and the bulkhead 54 is brought into the second position thereof, thus allowing the cut grass to leave from the outlet opening 53 by gravity.

Even if the cut grass is excessively of abundantly compacted against the inner walls of the collecting container 50, for example against the perimeter edge that delimits the outlet opening 53, the yielding nature of a part of the latter - due to the oscillation of the bulkhead 54 which passes from the first position to the second position - allows an efficient unloading of the cut grass, which rests less on the upper part (given by the bulkhead itself) and simultaneously the possibility of increasing the passage to enlarge the free passage gap of the outlet opening 53 itself.

The invention thus conceived is susceptible to several modifications and variations, all falling within the scope of the inventive concept.

Moreover, all the details can be replaced by other technically equivalent elements.

Practically, any materials and also any contingent shapes and sizes may be used, depending on the needs, without departing from the scope of protection of the following claims.

## Claims

1. A lawnmower (10) that comprises:
- a support frame (20);
- a device (40) for cutting grass; and
- a cut grass collecting device comprising:
a collecting container (50) connected to the cutting device (40) by means of a conveying conduit (45) connected to an inlet (52) of the collecting container and provided with an outlet opening (53) for unloading the grass from the collecting container (50);
a cover (60) movably connected to the collecting container (50) selectively between an open position and a closed position of the outlet opening (53); and
a bulkhead (54) delimiting an edge (531) of the outlet opening (53) and movable, when the cover (60) opens the outlet opening, between a first position in which the outlet opening (53) has a minimum size, and a second position in which the outlet opening (53) has a larger size than the minimum size.

2. The lawnmower (10) according to claim 1, wherein the cover (60) is hinged to the collecting container (50) with the possibility of oscillating about a hinging axis (B).

3. The lawnmower (10) according to claim 1, wherein the bulkhead (54) is hinged to the collecting container (50) with the possibility of oscillating about an oscillation axis (A).

4. The lawnmower (10) according to claims 2 and 3, wherein the hinging axis (B) and the oscillation axis (A) are parallel to and separate from each other.

5. The lawnmower (10) according to claim 1, wherein a first mouth (56) for evacuating air intercepted by a first grass retaining grid (560) fastened to the collecting container (50) is defined between the cover (60) and the collecting container (50), the bulkhead (54) being hinged to the first retaining grid (560) with the possibility of oscillating about an oscillation axis (A).

6. The lawnmower (10) according to claim 1, wherein the collecting container (50) comprises at least a second mouth (57) for evacuating the air intercepted by a second retaining grid (570).

7. The lawnmower (10) according to claim 1, wherein the collecting container (50) is articulated to the support frame (20) by means of an articulated arrangement (70) configured to tilt the collecting container (50) alternatively between a first operating position in which the cover (60) is in the closed position of the outlet opening (53) due to the effect of the weight force acting thereon and the bulkhead (54) is in the first position thereof, and a second operating position in which the cover (60) is in the open position of the outlet opening (53) due to the effect of the weight force acting thereon and the bulkhead (54) is in the second position thereof due to the effect of the weight force acing thereon.

8. The lawnmower (10) according to claim 7, wherein the articulated arrangement (70) is configured to raise the collecting container (50) in the passage from the first operating position to the second operating position.

9. A cut grass collecting device for lawnmowers (10), wherein the cut grass collecting device comprises:
a collecting container (50) provided with an inlet (52) for the grass cut by the lawnmower and an outlet opening (53) for unloading the grass from the collecting container (50);
a cover (60) movably connected to the collecting container (50) to selectively open and close the outlet opening; and
a bulkhead (54) delimiting an edge (531) of the outlet opening (53) and movable - when the cover (60) opens the outlet opening (53) - between a first position in which the outlet opening (53) has a minimum size, and an open position in which the outlet opening (53) has a larger size than the minimum size.
